# EUROPEAN PATENT APPLICATION

(11) **EP 2 039 427 A1**
(43) Date of publication of application: **25.03.2009**
(21) Application number: 07116179.8
(22) Date of filing: 12.09.2007
(51) Int. Cl.: B01J 29/06, B01J 29/18, B01J 29/40, C07C 4/06, C07C 4/10, C10G 11/05

(54) **Cracking of olefins on phosphorus modified molecular sieves**

(71) Applicant: TOTAL PETROCHEMICALS RESEARCH FELUY, 7181 Seneffe (Feluy) (BE)
(72) Inventor: Nesterenko, Nikolai, 1400 Nivelles (BE); Vermeiren, Walter, 3530 Houthalen (BE); Minoux, Delphine, 7181 Familleureux (BE); Van Donk, Sander, 1180 Uccle (BE)

(57) **Abstract**

The present invention provides a process for the catalytic cracking of an olefin-rich feedstock which is selective towards light olefins in the effluent, the process comprising contacting a hydrocarbon feedstock containing one or more olefins, with a catalyst made of a phosphorus-modified zeolite (A), to produce an effluent with an olefin content of lower molecular weight than that of the feedstock, wherein said phosphorous modified zeolite
(A) is made by a process comprising in that order:
- selecting a zeolite with low Si/Al ratio (advantageously lower than 30) among H⁺ or NH₄⁺-form of MFI, MEL, FER, MOR, clinoptilolite, said zeolite having been made preferably without direct addition of organic template;
- steaming at a temperature ranging from 400 to 870°C for 0.01-200h;
- leaching with an aqueous acid solution containing the source of P at conditions effective to remove a substantial part of Al from the zeolite and to introduce at least 0.3 wt% of P;
- separation of the solid from the liquid;
- an optional washing step or an optional drying step or an optional drying step followed by a washing step;
- a calcination step.

Said cracking of an olefin-rich feedstock is often referred in the following description and claims as OCP (Olefin Cracking Process).

The catalyst made of a P-modified zeolite (A) can be the P-modified zeolite (A) itself or it can be the P-modified zeolite (A) formulated into a catalyst by combining with other materials that provide additional hardness or catalytic activity to the finished catalyst product.

The zeolite with low Si/Al ratio has been made previously with or without direct addition of an organic template. The zeolite can be made with the help of seeds techniques but without template, the seeds could have been made with a template which means that the zeolite is made without direct addition of a template.

## Description

### [Field of the invention]

The present invention relates to the cracking of olefins on phosphorus modified molecular sieves (P-modified molecular sieves). More precisely the present invention relates to a process for cracking an olefin-rich hydrocarbon feedstock which is selective towards light olefins in the effluent. In particular, olefinic feedstocks from refineries or petrochemical plants can be converted selectively so as to redistribute the olefin content of the feedstock in the resultant effluent.

The P-modified zeolites of the invention are obtained from crystalline aluminosilicates having been synthesized preferably without template. This provides a lower catalyst cost and makes a preparation procedure more environmentally friendly.

### [Background of the invention]

The petrochemical industry is presently facing a major squeeze in propylene availability as a result of the growth in propylene derivatives, especially polypropylene. Traditional methods to increase propylene production are not entirely satisfactory. For example, additional naphtha steam cracking units which produce about twice as much ethylene as propylene are an expensive way to yield propylene since the feedstock is valuable and the capital investment is very high. Naphtha is in competition as a feedstock for steam crackers because it is a base for the production of gasoline in the refinery. Propane dehydrogenation gives a high yield of propylene but the feedstock (propane) is only cost effective during limited periods of the year, making the process expensive and limiting the production of propylene. Propylene is obtained from FCC units but at a relatively low yield and increasing the yield has proven to be expensive and limited. Yet another route known as metathesis or disproportionation enables the production of propylene from ethylene and butene. Often, combined with a steam cracker, this technology is expensive since it uses ethylene as a feedstock which is at least as valuable as propylene.

Thus there is a need for a high yield propylene production method which can readily be integrated into a refinery or petrochemical plant, taking advantage of feedstocks that are less valuable for the market place (having few alternatives on the market).

EP 1036133 B1 relates to a process for the catalytic cracking of an olefin-rich feedstock which is selective towards light olefins in the effluent, the process comprising contacting a hydrocarbon feedstock containing one or more olefins, with a MFI-type crystalline silicate catalyst having a silicon/aluminium atomic ratio of at least about 300 at an inlet temperature of from 500 to 600 °C, at an olefin partial pressure of from 0.1 to 2 bars and the feedstock being passed over the catalyst at an LHSV of from 10 to 30 h-1, to produce an effluent with an olefin content of lower molecular weight than that of the feedstock.

Guoliang Zhao et al have described a series of HZSM-5 catalysts with various phosphorus (P) loadings in "Effect of phosphorus on HZSM-5 catalyst for C4-olefin cracking reactions to produce propylene", Journal of Catalysis, Volume 248, Issue 1, 15 May 2007, Pages 29-37. In said prior art :
ZSM-5 zeolite with SiO₂/Al₂O₃ molar ratio of 40 was synthesized hydrothermally with tetrapropylammonium bromide (TPABr) as the template;
the products were filtered, washed, and dried at 120 °C in air for 10 h and then calcined at 600 °C for 3 h;
activation of zeolite sample was performed by repeated ion exchange with 5 wt% NH₄NO₃ solutions to obtain its ammonium form (i.e., NH₄ZSM-5);
the mixture of 50 wt% NH₄ZSM-5 was extruded with 50 wt% SiO₂ and then calcined at 600 °C for 3 h, thereby obtaining the HZSM-5 catalyst;
the P-modified HZSM-5 samples with various P contents were prepared by impregnating 20 g of HZSM-5 into 20 ml of aqueous solution containing desired amount of phosphoric acid, followed by drying at 50 °C for 24 h under vacuum and 120 °C for 4 h, and finally calcination at 600 °C for 3 h.

It is an object of the invention to provide a process for producing propylene having a high propylene yield and purity.

It is a further object of the present invention to provide such a process which can produce olefin effluents which are within, at least, a chemical grade quality.

It is yet a further object of the present invention to provide a process for producing olefins having a stable olefinic conversion and a stable product distribution over time.

It is yet a further object of the present invention to provide a process for converting olefinic feedstocks having a high yield on an olefin basis towards propylene, high propylene to ethylene ratio and irrespective of the origin and composition of the olefinic feedstock.

It has been discovered that a specific family of phosphorus modified molecular sieves leads to a very efficient cracking of olefins. The phosphorus modified molecular sieves used in the present invention are based on zeolite with low Si/Al ratio (advantageously below 30) preferably synthesized without direct addition of organic template, then the zeolite is subjected to a steam treatment at high temperature before a leaching step with acid solution containing the source of phosphorus which removes advantageously at least 10% of the Al from the zeolite and which leads to at least 0.3 wt% of P on the zeolite.

### [Brief description of the invention]

The present invention provides a process for the catalytic cracking of an olefin-rich feedstock which is selective towards light olefins in the effluent, the process comprising contacting a hydrocarbon feedstock containing one or more olefins, with a catalyst made of a phosphorus-modified zeolite (A), to produce an effluent with an olefin content of lower molecular weight than that of the feedstock, wherein said phosphorous modified zeolite (A) is made by a process comprising in that order:
- selecting a zeolite with low Si/Al ratio (advantageously lower than 30) among H⁺ or NH₄⁺-form of MFI, MEL, FER, MOR, clinoptilolite, said zeolite having been made preferably without direct addition of organic template;
- steaming at a temperature ranging from 400 to 870°C for 0.01-200h;
- leaching with an aqueous acid solution containing the source of P at conditions effective to remove a substantial part of Al from the zeolite and to introduce at least 0.3 wt% of P;
- separation of the solid from the liquid;
- an optional washing step or an optional drying step or an optional drying step followed by a washing step;
- a calcination step.

Said cracking of an olefin-rich feedstock is often referred in the following description and claims as OCP (Olefin Cracking Process).

The catalyst made of a P-modified zeolite (A) can be the P-modified zeolite (A) itself or it can be the P-modified zeolite (A) formulated into a catalyst by combining with other materials that provide additional hardness or catalytic activity to the finished catalyst product.

The zeolite with low Si/Al ratio has been made previously with or without direct addition of an organic template. The zeolite can be made with the help of seeds techniques but without template, the seeds could have been made with a template which means that the zeolite is made without direct addition of a template.

Advantageously the steaming step and the leaching step are consecutive, there is no intermediate steps such as, by way of example, contact with silica powder and drying.

Further to the leaching, the separation of the liquid from the solid is advantageously made by filtering at a temperature between 0-90°C, centrifugation at a temperature between 0-90°C, evaporation or equivalent.

Optionally, the zeolite can be dried after separation before washing. Advantageously said drying is made at a temperature between 40-600°C for 1-10h. This drying can be processed either in a static condition or in a gas flow. Air, nitrogen or any inert gases can be used. The washing step can be performed either during the filtering (separation step) with a portion of cold (<40°C) or hot water (> 40 but <90°C) or the solid can be subjected to a water solution (1 kg of solid/4 liters water solution) and treated under reflux conditions for 0.5-1 0h followed by evaporation or filtering.

Final calcination step is performed advantageously at the temperature 400-700°C either in a static condition or in a gas flow. Air, nitrogen or any inert gases can be used.

### [Detailed description of the invention]

**As regards (A) and the selected zeolite,** advantageously it is a crystalline alumosilicate of the MFI family or the MEL family. An example of MFI silicates is ZSM-5. An example of an MEL zeolite is ZSM-11 which is known in the art. Other examples are described by the International Zeolite Association (*Atlas of Zeolite Structure Types,* 1987, Butterworths).

Crystalline silicates are microporous crystalline inorganic polymers based on a framework of XO₄ tetrahydra linked to each other by sharing of oxygen ions, where X may be trivalent (e.g. Al, B,... ) or tetravalent (e.g. Ge, Si,...). The crystal structure of a crystalline silicate is defined by the specific order in which a network of tetrahedral units are linked together. The size of the crystalline silicate pore openings is determined by the number of tetrahedral units, or, alternatively, oxygen atoms, required to form the pores and the nature of the cations that are present in the pores. They possess a unique combination of the following properties: high internal surface area; uniform pores with one or more discrete sizes; ion exchangeability; good thermal stability; and ability to adsorb organic compounds. Since the pores of these crystalline alumosilicates are similar in size to many organic molecules of practical interest, they control the ingress and egress of reactants and products, resulting in particular selectivity in catalytic reactions. Crystalline alumosilicates with the MFI structure possess a bi-directional intersecting pore system with the following pore diameters: a straight channel along [010]: 0.53-0.56 nm and a sinusoidal channel along [100]: 0.51-0.55 nm. Crystalline alumosilicates with the MEL structure possess a bi-directional intersecting straight pore system with straight channels along [100] having pore diameters of 0.53-0.54 nm.

Advantageously the selected MFI, MEL, FER, MOR, clinoptilolite (or H⁺ or NH₄⁺-form MFI, MEL, FER, MOR, clinoptilolite) has an initial atomic ratio Si/Al of 30 or lower and preferably ranging from 4 to 30. The conversion to the H⁺ or NH₄⁺-form is known per se and is described in US 3911041 and US 5573990.

It has been found that phosphorus acid are very efficient in complexing the extra-framework aluminiumoxides and hence removing them from the zeolite solid material. Unexpectedly, a larger quantity of phosphorus than what could be expected from the typical pore volume of the zeolite and assuming that the pores of the zeolites are filled with the used phosphorus acid solution, stays in the solid zeolite material. The chemical functionalities of aluminum with phosphorus in the P-zeolite inhibit the further dealumination of zeolites, which, in turn, increases their stability and selectivity.

The zeolite can be MFI, MOR, MEL, clinoptilolite or FER crystalline aluminosilicate molecular sieves having a low initial Si/Al ratio (advantageously below 30) and preferably synthesized without direct addition of organic directing agent.

The method consists in steaming followed by leaching by a solution of phosphoric acid or by any acid solution containing the source of P. It is generally known by the persons in the art that steam treatment of zeolites, results in aluminium that leaves the zeolite framework and resides as aluminiumoxides in and outside the pores of the zeolite. This transformation is known as dealumination of zeolites and this term will be used throughout the text. The treatment of the steamed zeolite with an acid solution results in dissolution of the extra-framework aluminiumoxides. This transformation is known as leaching and this term will be used throughout the text. Then the zeolite is separated, advantageously by filtration, and optionally washed. A drying step can be envisaged between filtering and washing steps. The solution after the washing can be either separated, by way of example, by filtering from the solid or evaporated.

The residual P-content is adjusted by P-concentration in the leaching solution, drying conditions, and washing procedure if any. This procedure leads to dealumination of zeolites and retention of P. Advantageously, at least 0.3wt% of P is retained after dealumination on zeolite. Both factors dealumination and the retention of P stabilize the lattice aluminium in the zeolitic lattice, thus avoiding further dealumination. This leads to higher hydrothermal stability, tuning of molecular sieves properties and adjustment of acid properties. The degree of dealumination can be adjusted by the steaming and leaching conditions.

The P-modified zeolites of this recipe are obtained based on cheap crystalline alumosilicates with low Si/Al ratio preferably synthesized without direct addition of organic template. This provides a lower final catalyst cost and makes a preparation procedure more environmentally friendly. The recipe simplifies the procedure for P-ZSM preparation and allows adjusting the Si/Al ratio and P-content in the catalyst. The catalysts show high C3- yield, high C3-/C2- ratio, high stability, high C3's purity.

In the steam treatment step, the temperature is preferably from 420 to 870°C, more preferably from 480 to 760°C. The pressure is preferably atmospheric pressure and the water partial pressure may range from 13 to 100 kPa. The steam atmosphere preferably contains from 5 to 100 vol % steam with from 0 to 95 vol % of an inert gas, preferably nitrogen. The steam treatment is preferably carried out for a period of from 0.05 to 200 hours, more preferably from 0.05 to 50 hours. The steam treatment tends to reduce the amount of tetrahedral aluminium in the crystalline silicate framework by forming alumina.

The leaching with an aqueous acid solution containing the source of P is advantageously made under reflux conditions, meaning boiling temperature of the solution.

Amount of said acid solution is advantageously between 2 and 10 liters per kg of zeolite. A typical leaching period is around 0.5 to 24 hours. Advantageously the aqueous acid solution containing the source of P in the leaching step has a pH of 3, advantageously 2, or lower. Advantageously said aqueous acid solution is phosphorus acids, a mixture of phosphorus acids and organic or inorganic acid or mixtures of salts of phosphorus acids and organic or inorganic acids. The phosphorus acids or the corresponding salts can be of the phosphate ([PO₄]³⁻, being tribasic), phosphite ([HPO_{3]}²⁻, being dibasic), or hypophosphite ([H₂PO₂]¹⁻, being monobasic), type. Of the phosphate type also di or polyphosphates ([PₙO₃ₙ₊₁]⁽ⁿ⁺²⁾⁻) can be used. The other organic acids may comprise an organic acid such as citric acid, formic acid, oxalic acid, tartaric acid, malonic acid, succinic acid, glutaric acid, adipic acid, maleic acid, phthalic acid, isophthalic acid, fumaric acid, nitrilotriacetic acid, hydroxyethylenediaminetriacetic acid, ethylenediaminetetracetic acid, trichloroacetic acid trifluoroacetic acid or a salt of such an acid (e.g. the sodium salt) or a mixture of two or more of such acids or salts. The other inorganic acids may comprise an inorganic acid such as nitric acid, hydrochloric acid, methansulfuric acid, sulfuric acid or a salt of such an acid (e.g. the sodium or ammonium salts) or a mixture of two or more of such acids or salts.

Advantageously the final P-content of (A) is at least 0.3 wt% and preferably between 0.3 and 7 w%. Advantageously at least 10% of Al, in respect to parent zeolite MFI, MEL, FER, MOR and clinoptilolite, have been extracted and removed from the zeolite by the leaching. The residual P-content is adjusted by P-concentration in the leaching solution, drying conditions and a washing procedure if any. A drying step can be envisaged between filtering and washing steps.

Then the zeolite either is separated from the washing solution or is dried without separation from the washing solution. Said separation is advantageously made by filtration. Then the zeolite is calcined, by way of example, at 400°C for 2-10 hours.

**The solid (A) used in the present invention** can be used as itself as a catalyst. In another embodiment it can be formulated into a catalyst by combining with other materials that provide additional hardness or catalytic activity to the finished catalyst product. Materials which can be blended with (A) can be various inert or catalytically active materials, or various binder materials. These materials include compositions such as kaolin and other clays, various forms of rare earth metals, phosphates, alumina or alumina sol, titania, zirconia, quartz, silica or silica sol, and mixtures thereof. These components are effective in densifying the catalyst and increasing the strength of the formulated catalyst. The catalyst may be formulated into pellets, spheres, extruded into other shapes, or formed into a spray-dried particles. The amount of (A) which is contained in the final catalyst product ranges from 10 to 90 weight percent of the total catalyst, preferably 20 to 70 weight percent of the total catalyst.

**As regards the hydrocarbon feedstock containing one or more olefins sent to the OCP reactor,** in accordance with the present invention, cracking of olefins is performed in the sense that olefins in a hydrocarbon stream are cracked into lighter olefins and selectively into propylene. The feedstock and effluent preferably have substantially the same olefin content by weight. Typically, the olefin content of the effluent is within ±15wt%, more preferably ±10wt%, of the olefin content of the feedstock. The feedstock may comprise any kind of olefin-containing hydrocarbon stream. The feedstock may typically comprise from 10 to 100wt% olefins and furthermore may be fed undiluted or diluted by a diluent, the diluent optionally including a non-olefinic hydrocarbon. In particular, the olefin-containing feedstock may be a hydrocarbon mixture containing normal and branched olefins in the carbon range C₄ to C₁₀ more preferably in the carbon range C₄ to C₆, optionally in a mixture with normal and branched paraffins and/or aromatics in the carbon range C₄ to C₁₀. Typically, the olefin-containing stream has a boiling point of from around -15 to around 180°C.

In particularly preferred embodiments of the present invention, the hydrocarbon feedstocks comprise C₄ mixtures from refineries and steam cracking units. Such steam cracking units crack a wide variety of feedstocks, including ethane, propane, butane, naphtha, gas oil, fuel oil, *etc.* Most particularly, the hydrocarbon feedstock may comprises a C₄ cut from a fluidized-bed catalytic cracking (FCC) unit in a crude oil refinery which is employed for converting heavy oil into gasoline and lighter products. Typically, such a C₄ cut from an FCC unit comprises around 30-70wt% olefin. Alternatively, the hydrocarbon feedstock may comprise a C₄ cut from a unit within a crude oil refinery for producing methyl tert-butyl ether (MTBE) or ethyl tert-butyl ether (ETBE) which is prepared from methanol or ethanol and isobutene. Again, such a C₄ cut from the MTBE/ETBE unit typically comprises around 50wt% olefin. These C₄ cuts are fractionated at the outlet of the respective FCC or MTBE/ETBE unit. The hydrocarbon feedstock may yet further comprise a C₄ cut from a naphtha steam-cracking unit of a petrochemical plant in which naphtha, comprising C₅ to C₉ species having a boiling point range of from about 15 to 180°C, is steam cracked to produce, *inter alia*, a C₄ cut. Such a C₄ cut typically comprises, by weight, 40 to 50% 1,3-butadiene, around 25% isobutylene, around 15% butene (in the form of but-1-ene and/or but-2-ene) and around 10% n-butane and/or isobutane. The olefin-containing hydrocarbon feedstock may also comprise a C₄ cut from a steam cracking unit after butadiene extraction (raffinate 1), or after butadiene hydrogenation.

The feedstock may yet further alternatively comprise a hydrogenated butadiene-rich C₄ cut, typically containing greater than 50wt% C₄ as an olefin. Alternatively, the hydrocarbon feedstock could comprise a pure olefin feedstock which has been produced in a petrochemical plant.

The olefin-containing feedstock may yet further alternatively comprise light cracked naphtha (LCN) (otherwise known as light catalytic cracked spirit (LCCS)) or a C₅ cut from a steam cracker or light cracked naphtha, the light cracked naphtha being fractionated from the effluent of the FCC unit, discussed hereinabove, in a crude oil refinery. Both such feedstocks contain olefins. The olefin-containing feedstock may yet further alternatively comprise a medium cracked naphtha from such an FCC unit or visbroken naphtha obtained from a visbreaking unit for treating the residue of a vacuum distillation unit in a crude oil refinery.

The olefin-containing feedstock may comprise a mixture of one or more of the above-described feedstocks.

The use of a C₅ cut as the olefin-containing hydrocarbon feedstock in accordance with a preferred process of the invention has particular advantages because of the need to remove C₅ species in any event from gasolines produced by the oil refinery. This is because the presence of C₅ in gasoline increases the ozone potential and thus the photochemical activity of the resulting gasoline. In the case of the use of light cracked naphtha as the olefin-containing feedstock, the olefin content of the remaining gasoline fraction is reduced, thereby reducing the vapour pressure and also the photochemical activity of the gasoline.

When converting light cracked naphtha, C₂ to C₄ olefins may be produced in accordance with the process of the invention. The C₄ fraction is very rich in olefins, especially in isobutene, which is an interesting feed for an MTBE unit. When converting a C₄ cut, C₂ to C₃ olefins are produced on the one hand and C₅ to C₆ olefins containing mainly iso-olefins are produced on the other hand. The remaining C₄ cut is enriched in butanes, especially in isobutane which is an interesting feedstock for an alkylation unit of an oil refinery wherein an alkylate for use in gasoline is produced from a mixture of C₃ and C₅ feedstocks. The C₅ to C₆ cut containing mainly iso-olefins is an interesting feed for the production of tertiary amyl methyl ether (TAME) or tertiary amyl ethyl ether (TAEE).

Surprisingly, the present inventors have found that in accordance with the process of the invention, olefinic feedstocks can be cracked selectively so as to redistribute the olefinic content of the feedstock in the resultant effluent. The catalyst and process conditions are selected whereby the process has a particular yield on an olefin basis towards a specified olefin in the feedstocks. Typically, the catalyst and process conditions are chosen whereby the process has the same high yield on an olefin basis towards propylene irrespective of the origin of the olefinic feedstocks for example the C₄ cut from the FCC unit, the C₄ cut from the MTBE unit, the light cracked naphtha or the C₅ cut from the light crack naphtha, etc., This is quite unexpected on the basis of the prior art. The propylene yield on an olefin basis is typically from 30 to 50% based on the olefin content of the feedstock. The yield on an olefin basis of a particular olefin is defined as the weight of that olefin in the effluent divided by the initial total olefin content by weight. For example, for a feedstock with 50wt% olefin, if the effluent contains 20wt% propylene, the propylene yield on an olefin basis is 40%. This may be contrasted with the actual yield for a product which is defined as the weight amount of the product produced divided by the weight amount of the feed. The paraffins and the aromatics contained in the feedstock are only slightly converted in accordance with the preferred aspects of the invention.

**As regards the feedstock and according to a specific embodiment of the invention** the hydrocarbon feedstock containing one or more olefins is made in part or completely of the heavy hydrocarbon fraction coming from an XTO reactor. An XTO reactor is fed with oxygen-containing, halogenide-containing or sulphur-containing organic compounds and said are converted in said XTO reactor to olefin products (the effluent of the XTO). Said effluent comprises light olefins and a heavy hydrocarbon fraction. "light olefins" means ethylene and propylene and the "heavy hydrocarbon fraction" is defined herein as the fraction containing hydrocarbons having a molecular weight greater than propane, which means hydrocarbons having 4 carbon atoms or more and written as C₄⁺. The effluent of the XTO are fractionnated to recover the heavy hydrocarbon fraction. More than 80% by weight and advantageously more than 85% of the hydrocarbons having 4 carbon atoms or more are C4 to C8 olefins.

**With regards to the OCP process,** said process is known per se. It has been described in EP 1036133, EP 1035915, EP 1036134, EP 1036135, EP 1036136, EP 1036138, EP 1036137, EP 1036139, EP 1194502, EP 1190015, EP 1194500 and EP 1363983 the content of which are incorporated in the present invention.

The crystalline alumosilicate catalyst has structural and chemical properties and is employed under particular reaction conditions whereby the catalytic cracking of the C₄⁺ olefins readily proceeds. Different reaction pathways can occur on the catalyst. Olefinic catalytic cracking may be understood to comprise a process yielding shorter molecules via bond breakage.

In the catalytic cracking process of the OCP reactor, the process conditions are selected in order to provide high selectivity towards propylene or ethylene, as desired, a stable olefin conversion over time, and a stable olefinic product distribution in the effluent. Such objectives are favoured with a low pressure, a high inlet temperature and a short contact time, all of which process parameters are interrelated and provide an overall cumulative effect.

The process conditions are selected to disfavour hydrogen transfer reactions leading to the formation of paraffins, aromatics and coke precursors. The process operating conditions thus employ a high space velocity, a low pressure and a high reaction temperature. The LHSV ranges from 0.5 to 30 hr⁻¹, preferably from 1 to 30 hr⁻¹. The olefin partial pressure ranges from 0.1 to 2 bars, preferably from 0.5 to 1.5 bars (absolute pressures referred to herein). A particularly preferred olefin partial pressure is atmospheric pressure (i.e. 1 bar). The heavy hydrocarbon fraction feedstock is preferably fed at a total inlet pressure sufficient to convey the feedstocks through the reactor. Said feedstock may be fed undiluted or diluted in an inert gas, e.g. nitrogen or steam. Preferably, the total absolute pressure in the reactor ranges from 0.5 to 10 bars. The use of a low olefin partial pressure, for example atmospheric pressure, tends to lower the incidence of hydrogen transfer reactions in the cracking process, which in turn reduces the potential for coke formation which tends to reduce catalyst stability. The cracking of the olefins is preferably performed at an inlet temperature of the feedstock of from 400° to 650°C., more preferably from 450° to 600°C., yet more preferably from 540°C to 590°C. In order to maximize the amount of ethylene and propylene and to minimize the production of methane, aromatics and coke, it is desired to minimize the presence of diolefins in the feed. Diolefin conversion to monoolefin hydrocarbons may be accomplished with a conventional selective hydrogenation process such as disclosed in U.S. Pat. No. 4,695,560 hereby incorporated by reference.

The OCP reactor can be a fixed bed reactor, a moving bed reactor or a fluidized bed reactor. A typical fluid bed reactor is one of the FCC type used for fluidized-bed catalytic cracking in the oil refinery. A typical moving bed reactor is of the continuous catalytic reforming type. As described above, the process may be performed continuously using a pair of parallel "swing" reactors. The heavy hydrocarbon fraction cracking process is endothermic; therefore, the reactor should be adapted to supply heat as necessary to maintain a suitable reaction temperature. Several reactors may be used in series with interheating between the reactors in order to supply the required heat to the reaction. Each reactor does a part of the conversion of the feedstock. Online or periodic regeneration of the catalyst may be provided by any suitable means known in the art.

The various preferred catalysts of the OCP reactor have been found to exhibit high stability, in particular being capable of giving a stable propylene yield over several days, e.g. up to ten days. This enables the olefin cracking process to be performed continuously in two parallel "swing" reactors wherein when one reactor is in operation, the other reactor is undergoing catalyst regeneration. The catalyst can be regenerated several times.

As regards the effluent of OCP reactor, said effluent comprises methane, light olefins and hydrocarbons having 4 carbon atoms or more. Advantageously said OCP reactor effluent is sent to a fractionator and the light olefins (ethylene and propylene) are recovered. Advantageously the hydrocarbons having 4 carbon atoms or more are recycled at the inlet of the OCP reactor. Advantageously, before recycling said hydrocarbons having 4 carbon atoms or more at the inlet of the OCP reactor, said hydrocarbons having 4 carbon atoms or more are sent to a second fractionator to purge the heavies.

Optionally, in order to adjust the propylene to ethylene ratio ethylene in whole or in part can be recycled over the OCP reactor and advantageously converted into more propylene.

One skilled in the art will also appreciate that the olefin products made by the present invention can be polymerized optionally with one or more comonomers to form polyolefins, particularly polyethylenes and polypropylenes. The present invention relates also to said polyethylenes and polypropylenes.

### [Examples]

### EXAMPLE 1

A sample of zeolite ZSM-5 with Si/Al=12 (CBV2314) from Zeolyst International was first calcined 6h at 550°C (60°/min heating rate) and then was steamed at 680°C for 2h. Steamed solid was treated by 3,14M solution of H₃PO₄ for 18h under reflux condition (4,2liter/1kg of zeolite). Then the solid was separated by filtering from the solution. Obtained solid was dried first at 110°C for 16h and then at 400°C for 3h. Then the dried sample was subjected in a contact with hot water under reflux condition for 2h. Then the solid was separated by filtering from the solution and dried right away at 110°C for 16h and steamed at 600°C for 2h (Atomic ratio Si/Al 15, P-content 2,0 wt%).

The sample is hereinafter identified as Sample A.

### EXAMPLE 2

A sample of zeolite ZSM-5 with Si/Al=13 from TRICAT (TZP 302) was steamed at 550°C for 48h. Then the steamed solid was treated with 3,14M solution of H₃PO₄ for 18h under reflux condition (4,21iter/1kg of zeolite). Then the solid was separated by filtering from the solution. Obtained solid was dried at 110°C for 16h and calcined at 400°C for 10h. (Atomic ratio Si/Al 25, P-content 5,6 wt%).

The sample is hereinafter identified as Sample B.

### EXAMPLE 3-4 (OCP conditions)

Catalyst tests were performed on 10 ml ( 5.6 g) of catalyst grains (35-45 meshes) loaded in the tubular reactor. The feedstock which contains substantially non cyclic olefins C4 (∼60wt%) was subjected to catalytic cracking in the presence of catalyst in a fixed bed reactor at 550°C, LHSV= 2-4h⁻¹, P=1,5 bara. The results are in tables 1 and 2 hereunder. The values in the tables are given in the weight percent on carbon basis and represent an average catalyst performance during 24h TOS.

The data given below illustrate a cracking activity of P-ZSM-5 disclosing in this invention in C4 olefins conversion to propylene and ethylene.

**Table 1**

| | Sample A | |
|---|---|---|
| | Feed | Effluent* |
| Paraffins | 37.0 | 39.9 |
| Olefins | 62.5 | 59.2 |
| Dienes | 0.5 | 0.5 |
| Aromatics | 0.0 | 0.4 |
| C1 (methane) | 0.0 | 0.2 |
| Ethylene | 0.0 | 1.0 |
| Propylene | 0.2 | 11.7 |
| Butenes | 60.1 | 33.9 |
| C3-/C2- | - | 11.7 |

| | | |
|---|---|---|
| * LHSV=4h⁻¹ | | |

**Table 2**

| | Sample B | |
|---|---|---|
| | Feed | Effluent** |
| Paraffins | 41.1 | 41.5 |
| Olefins | 58.8 | 55.5 |
| Dienes | 0.0 | 0.7 |
| Aromatics | 0.0 | 2.3 |
| C1 (methane) | 0.0 | 0.4 |
| Ethylene | 0.0 | 5.0 |
| Propylene | 0.3 | 20.8 |
| Butenes | 57.4 | 19.2 |
| C3-/C2- | - | 4.2 |

| | | |
|---|---|---|
| LHSV=2h⁻¹ | | |

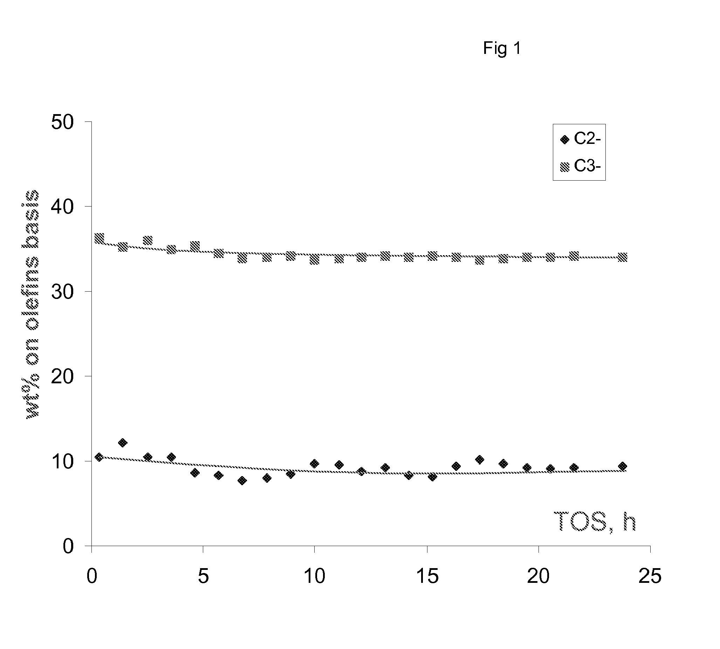

Figure 1 presents C2-, C3- yields on olefins basis and C3's purity in function on TOS in OCP for the sample B.

### EXAMPLE 5 (OCP conditions)

Catalyst tests were performed under the same condition (550°C, LHSV= 2h⁻¹, P=1,5 bara) as in examples 3-4 on 10 ml (5.6 g) of catalyst grains (35-45 meshes) loaded in the tubular reactor but with a different feedstock. The feedstock contained substantially non cyclic olefins C4-C8 (∼50 wt%) and was prepared by blending 50 wt% C4 FCC with 50 wt% LCCS. The result is in table 3 hereunder. The values in the table are given in the weight percent on carbon basis and represent an average catalyst performance during 24h TOS.

The data given below illustrate a cracking activity of P-ZSM-5 disclosing in this invention in C4-C8 olefins conversion to propylene and ethylene.

**Table 3**

| | Sample B | |
|---|---|---|
| | Feed | Effluent*** |
| Paraffins | 42.8 | 40.9 |
| Olefins | 50.1 | 46.9 |
| Dienes | 0.4 | 1.0 |
| Aromatics | 6.7 | 11.2 |
| C1 (methane) | 0.0 | 0.7 |
| Ethylene | 0.0 | 1.8 |
| Propylene | 0.4 | 12.6 |
| Butenes | 30.4 | 20.6 |
| C3-/C2- | - | 7 |

| | | |
|---|---|---|
| *** LHSV=2h⁻¹ | | |

## Claims

1. Process for the catalytic cracking of an olefin-rich feedstock which is selective towards light olefins in the effluent, the process comprising contacting a hydrocarbon feedstock containing one or more olefins, with a catalyst made of a phosphorus-modified zeolite (A), to produce an effluent with an olefin content of lower molecular weight than that of the feedstock, wherein said phosphorous modified zeolite (A) is made by a process comprising in that order:
- selecting a zeolite with low Si/Al ratio among H⁺ or NH₄⁺-form of MFI, MEL, FER, MOR, clinoptilolite;
- steaming at a temperature ranging from 400 to 870°C for 0.01-200h;
- leaching with an aqueous acid solution containing the source of P at conditions effective to remove a substantial part of Al from the zeolite and to introduce at least 0.3 wt% of P;
- separation of the solid from the liquid;
- an optional washing step or an optional drying step or an optional drying step followed by a washing step;
- a calcination step.

2. Process according to any one of the preceding claims wherein the zeolite has an initial Si/Al atomic ratio lower than 30.

3. Process according to claim 2 wherein the zeolite has an initial Si/Al atomic ratio ranging from 4 to 30.

4. Process according to any one of the preceding claims wherein said H⁺ or NH₄⁺-form of MFI, MEL, FER, MOR, clinoptilolite zeolite has been made without direct addition of organic template.

5. Process according to any one of the preceding claims wherein the steaming is made at a temperature ranging from 480 to 760°C.

6. Process according to any one of the preceding claims wherein the steaming is carried out for a period of from 0.05 to 200 hours.

7. Process according to claim 5 wherein the steaming is carried out for a period of from 0.05 to 50 hours.

8. Process according to any one of the preceding claims wherein the leaching with an aqueous acid solution containing the source of P is made under boiling conditions of the solution.

9. Process according to any one of the preceding claims wherein further to the leaching step and the separation the zeolite is dried at a temperature between 40 and 600°C.

10. Process according to any one of the preceding claims wherein the leaching period is 0.5 to 24 hours.

11. Process according to any one of the preceding claims wherein the aqueous acid solution containing the source of P in the leaching step has a pH of 3 or lower.

12. Process according to claim 10 wherein said aqueous leaching acid solution is phosphorus acids, a mixture of phosphorus acids and organic or inorganic acids or mixtures of salts of phosphorus acids and organic or inorganic acids.

13. Process according to any one of the preceding claims wherein the final P-content of (A) is between 0.3 and 7 w%.

14. Process according to any one of the preceding claims wherein at least 10% of Al, in respect to parent zeolite MFI, MEL, FER, MOR and clinoptilolite, have been extracted and removed by leaching.

15. Process according to any one of the preceding claims wherein further to the leaching step and the separation there is a washing step.

16. Process according to any one of the preceding claims wherein the effluent is sent to a fractionator and the light olefins are recovered; the hydrocarbons having 4 carbon atoms or more are recycled on the catalyst made of a phosphorus-modified zeolite (A).

17. Process according to any one of the preceding claims wherein ethylene is further polymerized optionally with one or more comonomers.

18. Process according to any one of claims 1 to 16 wherein propylene is further polymerized optionally with one or more comonomers.
